**Europäisches Patentamt**

**European Patent Office**

**Office européen des brevets**

(19)

(11) Publication number: **0 091 407**
**B1**

(12) **EUROPEAN PATENT SPECIFICATION**

(45) Date of publication of patent specification: **06.08.86**

(51) Int. Cl.⁴: **F 16 H 3/64, B 60 K 17/16**

(21) Application number: **83830063.0**

(22) Date of filing: **23.03.83**

(54) **Motor vehicle transmission system.**

(30) Priority: **05.04.82 IT 6744882**

(43) Date of publication of application:
**12.10.83 Bulletin 83/41**

(45) Publication of the grant of the patent:
**06.08.86 Bulletin 86/32**

(84) Designated Contracting States:
**DE FR GB IT SE**

(56) References cited:
**DE-A-2 944 928**
**FR-A-1 397 983**
**US-A-2 071 165**
**US-A-2 730 914**
**US-A-3 031 900**
**US-A-3 182 528**

**Kinematik/Getriebelehre, H.J. Knab, 1930,**
**Nürnberg, Selbstverlag, pp.139-140**

(73) Proprietor: **S.I.R.P. STUDI INDUSTRIALI**
**REALIZZAZIONE PROTOTIPI S.p.A.**
**Via A.Grandi 11**
**I-10024 Moncalieri (Torino) (IT)**

(72) Inventor: **Candellero, Giovanni**
**Via S.Marino 21**
**I-10134 Torino (IT)**

(74) Representative: **Jacobacci, Filippo et al**
**c/o JACOBACCI-CASETTA & PERANI S.p.A. Via**
**Alfieri 17**
**I-10121 Torino (IT)**

Courier Press, Leamington Spa, England.

## Description

The present invention relates to a transmission system for a motor vehicle which has a transversely-mounted front engine, a gear box also mounted transversely, and a differential connecting the secondary shaft of the gear box to the two half-axles of the front wheels.

A transmission system of the kind indicated above is disclosed for example in FR—A—1 397 983.

The problem which the present invention seeks to solve is to provide a transmission system of the type specified above which has a series of stepped-up transmission ratios in addition to the normal transmission ratios of the gear box.

From US—A—2 071 165 a rear wheel drive differential is known which includes a shiftable epicyclic step-up gear train. Such gear train includes an internally-toothed crown wheel connected to the planet carrier of the differential, a sun gear and a number of planets carried by a planet carrier which is driven by the transmission shaft of the vehicle, each planet meshing both with the crown wheel and with the sun gear.

By this particular arrangement, it is not possible to obtain a structure of reduced dimensions and small bulk, capable to transmit the requested torque to the wheel axles.

From US—A—2 730 914 a rear wheel drive differential is also known which includes a shiftable epicyclic gear train having the same disadvantages of the device of US—A—2 071 165. Moreover, the gear train shown in this reference is a *step-down* gear train.

An epicyclic gear train in combination with a front wheel drive system is also known (see DE—A—2 944 928) which however has a structure and arrangement not suitable to be efficiently used as a shiftable step-up gear train in a transmission system of the kind indicated at the beginning of this description. In particular, such known gear train is provided with control means for shifting between a forward step-up mode of operation and a reversing mode of operation, and *vice versa*. There is no possibility to cause forward motion of the vehicle, while avoiding intervention of the step-up gear train.

Furthermore, it is to be noted that step-up epicyclic gear trains are already known, in which the planets of the gear train mesh with each other in pairs, and in which the planets of each pair mesh one with the sun gear and the other with the crown wheel (see "Kinematik/Getriebelehre", H.J. Knab, 1930, page 139, Abb. 1231).

The specific object of the present invention is to solve the above mentioned problem with a structure which avoids the disadvantages of the prior art.

According to the present invention, this object is achieved by providing a motor vehicle transmission system as defined in the characterising portion of the annexed claim 1.

The said gear train is rendered operative during economy cruising of the vehicle but inoperative during acceleration phases when it is necessary to use the normal speeds of the gear box.

The present invention will now be described with reference to the appended drawings, provided purely by way of non-limiting example, in which:

Figure 1 is a perspective view of a transmission system according to the present invention,

Figure 2 is a partially-sectioned view of a detail of the transmission system of Figure 1,

Figure 3 is a section taken on line III—III of Figure 2, and

Figure 4 is a section, on an enlarged scale, of a detail of Figure 2.

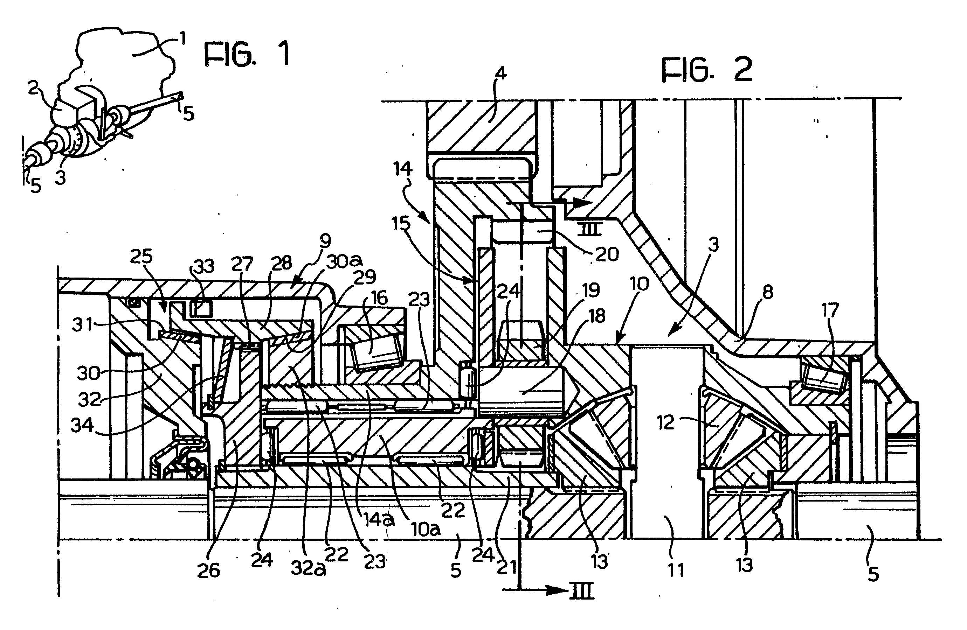

In Figure 1, an internal combustion engine is schematically indicated 1 and is intended to be mounted in the front part of a motor vehicle with its shaft disposed transversely of the longitudinal axis of the motor vehicle.

The engine 1 includes a gear box 2 of the type with gears in continuous mesh and which has a primary shaft and a secondary shaft also arranged transversely of the longitudinal axis of the vehicle.

A front differential indicated by 3 is driven by a pinion 4 (see Figure 2) carried by the secondary shaft 2 and transmits drive torque to the front wheels of the motor vehicle through two half-axles 5.

The front differential 3 is housed in a housing 8 joined to the housing 9 of the gear box.

The differential 3 is of the known type having a planet carrier 10 (see Figure 2) including a pin 11 on which are rotatably mounted two planets 12 (only one of which is shown in Figure 2) which mesh with two pinions 13 keyed onto the facing ends of the two half-axles 5.

The pinion 4 which is keyed onto the secondary shaft of the gear box, meshes with a gear 14 which is connected to the planet carrier 10 of the differential 3 through an epicyclic gear train 15.

The gear 14 and the planet carrier 10 are rotatably mounted within the housing of the gear box by means of conical bearings 16, 17.

In the embodiment illustrated in the drawings, the planet carrier 10 of the differential 3 also acts as a planet carrier for the epicyclic step-up gear train 15. Thus, the pins 18 on which six planets 19 are rotatably mounted, are fixed to the planet carrier 10.

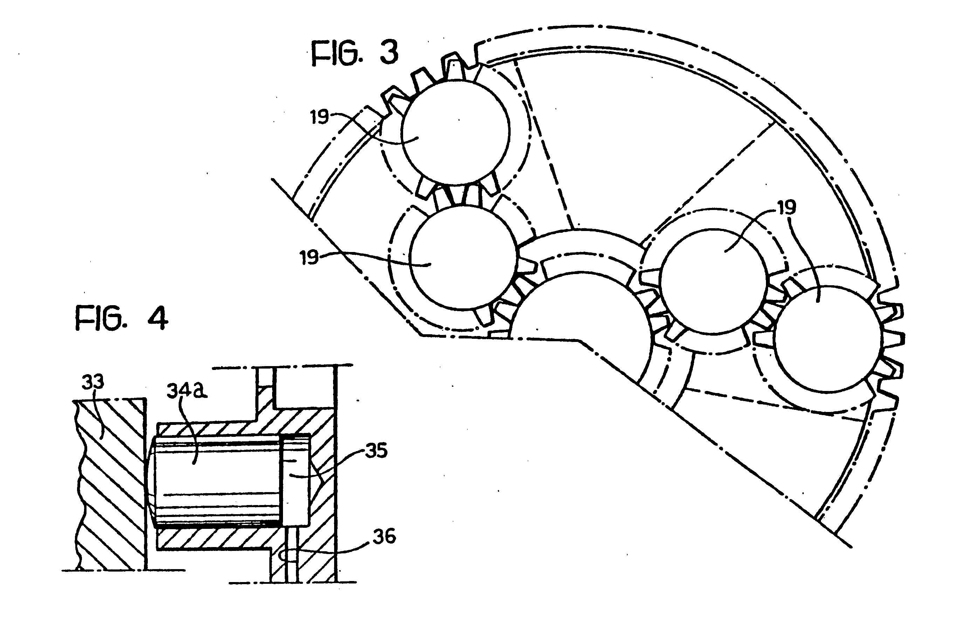

As illustrated in Figure 3, the planets 19 mesh with each other in pairs, the three pairs of planets being equi-angularly spaced from each other. Moreover, one planet of each pair meshes with an internally-toothed crown wheel 20 carried by the gear 14 while the other planet of each pair (see Figure 2) meshes with the toothed ring of a sun gear 21 rotatably mounted, by means of roller bearings 22, within a hub 10a of the planet carrier 10 of the differential 3. Two cylindrical roller bearings 23 are interposed between the hub 10a of the planet carrier 10 and the hub of the gear 14, indicated by reference numeral 14a.

Axial bearings 24 are also provided for transmiting axial thrust to the conical bearings 16, 17.

The system illustrated in Figure 2 further includes a device 25 for selectively rendering the epicyclic step-up gear train 15 operative and inoperative.

The device 25 includes a disc 26 keyed to the sun gear 21. A bell 28 is axially slidable on this disc 26 by means of a grooved coupling 27. The bell 28 has two internal conical end surfaces 29, 30 respectively arranged to engage two conically shaped friction washers 30a, 31 which are respectively carried by a disc 32a fixed to the hub 14a and by an element 32 fixed to the gear box housing 9.

A cup spring 34 serves to urge the bell 28 towards a first operative position in which the conical surface 29 is in contact with the washer 30a so as to render the sun gear 21 and the gear 14 rigid with each other.

The device 25 includes an hydraulically-controlled actuator 33, illustrated in detail in Figure 4, which is arranged to effect displacement of the bell 28 into a second operative position in which the conical surface 30 is in contact with the friction washer 31 thereby rendering the sun gear 21 rigid with the fixed structure of the gear box.

The device 33 includes a piston 34a slidably mounted in a chamber 35 formed in the fixed structure of the gear box and communicating with a duct 36 for the flow of fluid under pressure.

The operation of the system described above is as follows: ·

When it is desired to use the normal speeds of the gear box, the chamber 35 is not under pressure, and the cup spring 34 maintains the bell 28 in its first operative position, illustrated in Figure 2. In this condition, the sun gear 21 of the epicyclic step-up gear train 15 is rigid with the gear 14 which carries the internally-toothed crown wheel 20. The epicyclic gear train is thus locked and the transmission from the pinion 4 to the planet carrier 10 occurs without any step-up.

When it is desired to use the step up drive, fluid under pressure is caused to flow into the chamber 35 so as to displace the piston 34 towards the left (with reference to Figure 4). This displacement causes a corresponding displacement of the bell 28 towards the left (with reference to Figure 2) against the action of the cup spring 34. The bell 28 is thus brought into its second operative position in which it renders the sun gear 21 rigid with the fixed structure of the gear box. In this condition, the gear train 15 acts as a step-up gear train whereby the transmission system provides a series of transmission ratios which are stepped-up with respect to the normal transmission ratios of the gear box.

This result is achieved by means of a relatively simple structure of small bulk, which is housed in the housing of the front differential of the transmission system.

Naturally, in place of the cone clutch system illustrated in Figure 2, a synchroniser device of the type normally used in gear boxes with continuously meshing gears could be used as the device for selectively rendering the epicyclic step-up gear train operative and inoperative.

## Claims

1. A transmission system for a motor vehicle which has a transversely-mounted front engine (1), a gear box (2) also disposed transversely, and a differential (3) connecting the secondary shaft of the gear box to the two half-axles (5) of the front wheels, characterised by the following combination of features:

a) said system includes
— an epicyclic step-up gear train (15) housed in the housing (8) of the differential (3) and connecting the secondary shaft of the gear box to the planet carrier (10) of the differential (3),.and
— a device (25) for selectively rendering the said epicyclic step-up gear train (15) operative and inoperative,

b) the said epicyclic gear train (15) includes
— an internally-toothed crown wheel (20) carried by a gear (14) which meshes with a corresponding pinion (4) keyed onto the secondary shaft of the gear box,
— a sun gear (21) rotatably mounted relative to the planet carrier (10) of the differential (3) and relative to the said gear (14), and
—· a series of planets (19) carried by a planet carrier having a hub (10a) which is rotatably mounted within a hub (14a) of said gear (14),

c) said gear (14) and said internally-toothed crown wheel (20) have a one-piece construction,

d) said planet carrier of the epicyclic gear train and the planet carrier (10) of the differential have a one-piece construction,

e) said planets (19) mesh with each other in pairs, and the planets of each pair mesh one with the sun gear (21) and the other with internally-toothed crown wheel (20) of the epicyclic gear train,

f) said device (25) for rendering the epicyclic ··· step-up gear train (15) operative and inoperative includes a movable member (28) selectively displaceable between a first operative position in which it renders the sun gear (21) rigid with the gear (14) and a second operative position in which it renders the sun gear (21) rigid with the fixed structure of the gear box.

2. A transmission system according to claim 1, characterised in that the said control device (25) is constituted by an hydraulically-controlled cone clutch device.

3. A transmission system according to claim 2, characterised in that the hydraulically-controlled cone clutch device (25) includes a bell (28) coupled for rotation with the sun gear (21) and displaceable axially relative thereto, this bell (28) having two internal conical end surfaces (29, 30) for cooperating respectively with two conical friction washers (30a, 31) rigid with the said gear (14) and the fixed structure (9) of the gear box; resilient means (34) biasing the bell (28) axially towards a first operative position in which one of its internal conical end surfaces (29) comes into frictional contact with the friction washer (30a) rigid with the said gear (14) and hydraulic control means for pushing the bell (28) axially towards a second operative position in which the other internal conical end surface (30) comes into frictional contact with the friction washer (31) rigid with the fixed structure (9) of the gear box.

4. A transmission system according to claim 3, characterised in that the said hydraulic control means (33) include a piston (34) slidably mounted in a chamber (35) formed in the fixed structure (9) of the gear box and communicating with a duct (36) for the flow of fluid under pressure.

**Revendications**

1. Système de transmission pour un véhicule à moteur qui présente un moteur avant monté transversalement (1), une boîte de vitesses (2) également disposée transversalement et un différentiel (3) reliant l'arbre secondaire de la boîte de vitesses aux deux demi-arbres (5) des roues avant, caractérisé par la combinaison suivante de caractéristiques:

a) ledit système comprend

— un train d'engrenages multiplicateur épicycloïdal (15) logé dans le carter (8) du différentiel (3) et reliant l'arbre secondaire de la boîte de vitesses au porte-satellites (10) du différentiel (3) et

— un dispositif (25) pour rendre sélectivement actif et inactif ledit train d'engrenages multiplicateur épicycloïdal (15),

b) ledit train d'engrenages épicycloïdal (15) comprend

— une couronne dentée à denture interne (20) portée par un engrenage (14) qui engrène avec un pignon correspondant (4) claveté sur l'arbre secondaire de la boîte de vitesses,

— un pignon solaire (21) monté rotatif par rapport au porte-satellites (10) du différentiel (3) et par rapport audit engrenage (14) et

— une série de satellites (19) portés par un porte-satellites présentant un moyeu (10a) qui est monté rotatif à l'intérieur d'un moyeu (14a) dudit engrenage (14),

c) ledit engrenage (14) et ladite couronne dentée à denture interne (20) ayant une structure monobloc,

d). ledit porte-satellites du train d'engrenages épicycloïdal et le porte-satellites (10) du différentiel ont une structure monobloc,

e) lesdits satellites (19) engrènent l'un avec l'autre par paires et les satellites de chaque paire engrènent l'un avec le pignon solaire (21) et l'autre avec la couronne dentée à denture interne (20) du train d'engrenages épicycloïdal,

f) ledit dispositif (25) servant à rendre actif et inactif le train d'engrenages multiplicateur èpicycloïdal (15) comprend une pièce mobile (28) déplaçable de manière sélective entre une première position active dans laquelle elle rend le pignon solaire (21) solidaire de l'engrenage (14) et une seconde position active dans laquelle elle rend le pignon solaire (21) solidaire de la structure fixe de la boîte de vitesses.

2. Système de transmission selon la revendication 1, caractérisé en ce que ledit dispositif de commande (25) est constitué par un dispositif d'embrayage conique commandé hydrauliquement.

3. Système de transmission selon la revendication 2, caractérisé en ce que le dispositif d'embrayage conique commandé hydrauliquement (25) comprend une cloche (28) accouplée en rotation au pignon solaire (21) et déplaçable axialement par rapport à celui-ci, cette cloche (28) présentant deux surfaces extrêmes coniques internes (29, 30) pour coopérer respectivement avec deux rondelles de friction coniques (30a, 31) solidaires dudit engrenage (14) et de la structure fixe (9) de la boîte de vitesses, des moyens élastiques (34) repoussant la cloche (28) axialement vers une première position active dans laquelle l'une de ses surfaces extrêmes coniques internes (29) vient en contact de frottement avec la rondelle de friction (30a) solidaire dudit engrenage (14) et des moyens de commande hydraulique pour pousser la cloche (28) axialement vers une seconde position active dans laquelle l'autre surface extrême conique interne (30) vient en contact de frottement avec la rondelle de friction (31) solidaire de la structure fixe (9) de la boîte de vitesses.

4. Système de transmission selon la revendication 3, caractérisé en ce que lesdits moyens de commande hydraulique (33) comprennent un piston (34) monté de manière coulissante dans une chambre (35) ménagée dans la structure fixe (9) de la boîte de vitesses et communiquant avec un conduit (36) destiné à l'écoulement d'un fluide sous pression.

**Patentansprüche**

1. Getriebesystem für ein Kraftfahrzeug, welches einen querliegend montierten Frontmotor (1), ein ebenfalls querliegend angeordnetes Getriebegehäuse (2) und ein die Sekundärwelle des Getriebegehäuses mit den beiden Halbachsen (5) der Vorderräder verbindendes Differential (3) aufweist, gekennzeichnet durch die folgende Kombination von Merkmalen:

a) das System umfaßt

ein epizyklisches Übersetzungsgetriebe (15), welches im Gehäuse (8) des Differentials (3) untergebracht ist und die Sekundärwelle des Getriebegehäuses mit dem Planetenträger (10) des Differentials (3) verbindet, und

eine wahlweise betätigbare Einrichtung (25) zum Aktivieren und Deaktivieren des epizyklischen Übersetzungsgetriebes (15),

b) das epizyklische Getriebe (15) umfaßt

einen innenverzahnten Radkranz (20), welcher von einem Zahnrad (14) getragen ist, welches mit einem zugeordneten, auf der Sekundärwelle des Getriebegehäuses verkeilten Ritzel (4) kämmt,

ein relativ zum Planetenträger (10) des Differentials (3) und relativ zu dem Zahnrad (14) drehbar gelagertes Sonnenrad (21) und

eine Reihe von Planetenrädern (19), welche von einem Platenträger getragen sind, welcher mit einer Nabe (10a) drehbar in einer Nabe (14a) des Zahnrads (14) gelagert ist,

c) das Zahnrad (14) und der innenverzahnte Zahnkranz (20) stellen eine einstückige Konstruktion dar,

d) der Planetenträger des epizyklischen Getriebes und der Planetenträger (10) des Differentials stellen eine einstückige Konstruktion dar,

e) die Planetenräder (19) kämmen paarweise miteinander, und von den Planetenrädern jedes Paares kämmt eines mit dem Sonnenrad (21) und das andere mit dem innenverzahnten Zahnkranz (20) des epizyklischen Getriebes,

f) die Einrichtung (25) zum Aktivieren und Deaktivieren des epizyklischen Getriebes weist ein bewegliches Teil (28) auf, welches wahlweise zwischen einer ersten Arbeitsstellung, in welcher es das Sonnenrad (21) starr mit dem Zahnrad (14) verbindet, und einer zweiten Arbeitsstellung bewegbar ist, in welcher es das Sonnenrad (21) starr mit der feststehenden Konstruktion des Getriebegehäuses verbindet.

2. Getriebesystem nach Anspruch 1, dadurch gekennzeichnet, daß die genannte Steuereinrichtung (25) durch eine hydraulisch gesteuerte Konuskupplungsanordnung gebildet ist.

3. Getriebesystem nach Anspruch 2, dadurch gekennzeichnet, daß die hydraulisch gesteuerte Konuskupplungsanordnung (25) eine gemeinsam mit dem Sonnenrad (21) drehbar mit diesem verbundene und relativ dazu axial bewegbare Glocke (28) aufweist, daß die Glocke zwei innere konische Endflächen (29, 30), welche mit zwei starr mit dem Zahnrad (14) bzw. mit der feststehenden Konstruktion (9) des Getriebegehäuses verbundenen konischen Reibscheiben (30a, 31) zusammenwirken, daß die Glocke (28) durch eine elastische Einrichtung (34) in Axialrichtung auf eine erste Arbeitsstellung zu belastet ist, in welcher eine ihrer inneren konischen Endflächen (29) in reibschlüssige Berührung mit der starr mit dem Zahnrad (14) verbundenen Reibscheibe (30a) kommt, und daß die Glocke (28) mittels hydraulischer Steuereinrichtungen in Axialrichtung auf eine zweite Arbeitsstellung zu verschiebbar ist, in welcher die andere innere konische Endfläche (30) in reibschlüssige Berührung mit der starr mit der feststehenden Konstruktion (9) des Getriebegehäuses verbundenen Reibscheibe (31) kommt.

4. Getriebesystem nach Anspruch 3, dadurch gekennzeichnet, daß die genannte hydraulische Steuereinrichtung (33) einen Kolben (34) aufweist, welcher verschieblich in einer in der feststehenden Konstruktion (9) des Getriebegehäuses ausgebildeten Kammer (35) gelagert ist, welche mit einer Leitung (36) für ein sie unter Druck durchströmendes Strömungsmittel strömungsverbunden ist.

FIG. 1

FIG. 2

0 091 407

FIG. 3

19

19

19

19

FIG. 4

33

34a

35

36